# FASCICULE DE BREVET EUROPEEN

(11) **EP 3 504 076 B1**
(45) Date de publication et mention de la délivrance du brevet: **13.04.2022**
(21) Numéro de dépôt: 17746166.2
(22) Date de dépôt: 03.07.2017
(51) Int. Cl.: B60J 5/04, E05F 11/48

(54) **DISPOSITIF LÈVE-VITRE POUR UN OUVRANT D'UN VÉHICULE AUTOMOBILE**
FENSTERHEBEVORRICHTUNG FÜR EINE ÖFFNUNGSPLATTE EINES KRAFTFAHRZEUGS
WINDOW LIFTING DEVICE FOR AN OPENING PANEL OF A MOTOR VEHICLE

(30) Priorité: 26.08.2016 FR 1657971
(43) Date de publication de la demande: 03.07.2019
(73) Titulaire: PSA Automobiles SA, 78300 Poissy (FR)
(72) Inventeur: BERREUR, Jean Charles, 94800 Villejuif (FR); ALRIC, Brice, 78370 Plaisir (FR); MILOHANIC, Daniel, 91300 Massy (FR); JEUFFE, Gerard, 78580 Bazemont (FR)
(86) Numéro de dépôt international: PCT/FR2017/051799
(87) Numéro de publication internationale: WO 2018/037169

(56) Documents cités:
- WO-A1-2007/111782
- DE-A1-102004 026 664
- DE-A1-102016 201 618
- US-A- 4 471 251

## Description

La présente invention concerne un dispositif lève-vitre, notamment équipé dans un ouvrant d'un véhicule automobile.

Un tel ouvrant comprend une doublure interposée entre un panneau de garnissage interne et un panneau extérieur. La doublure délimite avec le panneau de garnissage interne une zone sèche et avec le panneau extérieur une zone humide.

Le dispositif lèvre-vitre est logé dans la zone humide de l'ouvrant et comprend un moteur électrique qui entraîne en rotation un tambour ayant une gorge de guidage d'un câble s'enroulant dans une partie de la gorge. Le câble est relié à un curseur apte à se déplacer le long d'un rail de guidage, lequel curseur est relié à la partie inférieure de la vitre de l'ouvrant à ouvrir ou à fermer électriquement.

Le dispositif lève-vitre est fixé dans la partie inférieure de la zone humide non étanche de sorte qu'il est soumis à des projections d'eau, par exemple lors du lavage du véhicule, et pouvant s'écouler le long du câble jusqu'au moteur électrique et au tambour. Lors de périodes de grands froids, l'eau qui stagne sur le câble et au niveau du moteur électrique et du tambour peut geler et empêcher le fonctionnement du dispositif lève-vitre. En outre, les projections d'eau sur le moteur électrique peuvent provoquer un risque de court-circuit grave.

Le document FR 3 014 766 divulgue un dispositif lève-vitre logé dans la zone humide du caisson d'un ouvrant de véhicule automobile et dont l'ensemble à moteur électrique et tambour est protégé par un écran de protection contre de l'eau susceptible de se déposer sur cet ensemble. Le document DE102004026664 décrit un dispositif de lève-vitre avec un boîtier support d'un moteur électrique et des rails de guidage.

Cependant, le rajout d'un écran de protection additionnel est complexe, encombrant et onéreux.

La présente invention a pour but de palier les inconvénients de l'art antérieur ci-dessus.

A cet effet, l'invention propose un dispositif lève-vitre qui comprend un moteur électrique permettant d'entraîner un mécanisme à tambour, câble, rail et curseur pour déplacer une vitre entre ses positions ouverte et fermée, et qui où le moteur électrique est fixé à une platine de support en matière plastique rigide du dispositif lève-vitre et fixée à la doublure, lequel moteur électrique est disposé avec le tambour dans l'espace entre la platine de support et la doublure et la platine de support comprend un écran de protection réalisé en une seule pièce avec cette platine et surplombant le moteur électrique et le tambour pour les protéger de l'eau susceptible de ruisseler au-dessus du moteur électrique et du tambour. Caractérisé en ce que le rail de guidage du curseur est en outre réalisé en une seule pièce avec la platine de support.

Avantageusement, le tambour est logé dans une paroi annulaire de la platine de support et située en regard du moteur électrique.

Avantageusement, l'écran de protection comprend une partie de paroi arquée prolongée par une partie de paroi rectiligne et qui s'étendent dans un plan vertical et longitudinal de l'ouvrant.

Avantageusement, la platine de support comprend une ouverture traversante destinée à la fixation d'un haut-parleur.

De préférence, la platine de support est réalisée à base de polytéréphtalate de butylène 30%.

L'invention vise également un ouvrant de véhicule, notamment automobile, comprenant une doublure interposée entre un panneau de garnissage interne et un panneau extérieur, la doublure délimitant avec le panneau de garnissage interne une zone sèche et avec le panneau extérieur une zone humide, et un dispositif lève-vitre tel que défini précédemment qui est logé dans la zone humide, lequel moteur électrique est disposé avec le tambour dans l'espace entre la platine de support et la doublure, l'écran de protection surplombant le moteur électrique et le tambour pour les protéger de l'eau susceptible de ruisseler au-dessus du moteur électrique et du tambour.

Avantageusement, le tambour est logé dans une paroi annulaire de la platine de support qui comprend une ouverture traversante destinée à la fixation d'un haut-parleur et est réalisée à base de polytéréphtalate de butylène 30%.

L'invention vise en outre un véhicule automobile comprenant au moins un ouvrant, caractérisé en ce que l'ouvrant est tel que défini précédemment.

De préférence, l'ouvrant est une porte latérale.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

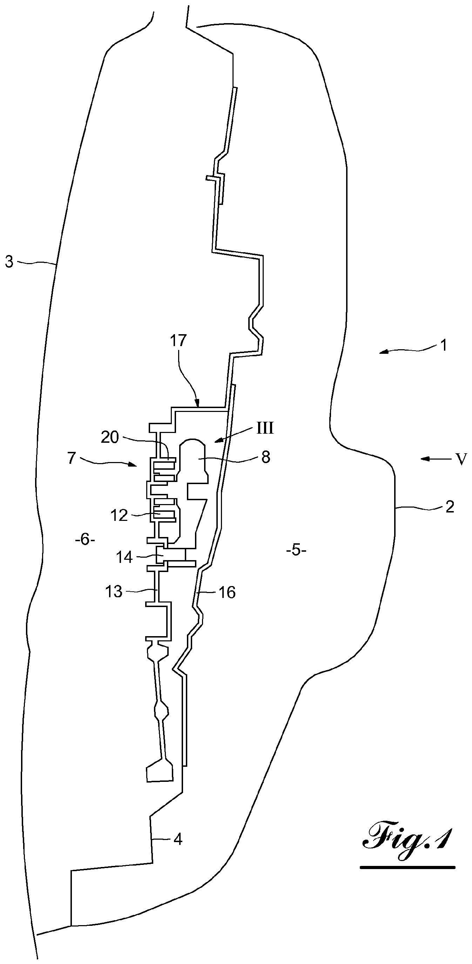

- la figure 1 est une vue en coupe transversale d'une partie d'une porte latérale d'un véhicule automobile équipée d'un dispositif lève-vitre conforme à l'invention,
- la figure 2 est une vue en perspective du dispositif lève-vitre de l'invention,
- la figure 3 est une vue en perspective suivant la flèche III de la figure 1
- la figure 4 est une vue en perspective en arrière de la figure 3, et
- la figure 5 est une vue intérieure de la porte complète suivant la flèche V de la figure 1.

En se reportant aux figures, la référence 1 désigne un ouvrant d'un véhicule automobile et constitué dans le cas présent par une porte latérale.

La porte latérale 1 comprend un panneau de garnissage interne 2 situé côté habitacle du véhicule et un panneau 3 situé côté extérieur au véhicule.

La porte latérale 1 comprend en outre une doublure interne 4 interposée entre le panneau de garnissage interne 2 et le panneau extérieur 3.

La doublure interne 4 délimite avec le panneau de garnissage 2 une zone sèche 5 et elle délimite avec le panneau extérieur 3 une zone humide 6.

Un dispositif lève-vitre 7 est logé dans la zone humide 6 entre le panneau extérieur 3 et la doublure interne 4.

Comme cela est connu en soi, le dispositif lève-vitre 7 comprend un moteur électrique 8, un rail 9 le long duquel peut coulisser un curseur 10 portant la vitre (non représentée), le déplacement du curseur 10 le long du rail 9 étant actionné par au moins un câble menant 11 qui s'enroule autour d'un tambour 12 pour faire monter ou descendre le curseur 10 et donc la vitre suivant le sens de rotation du moteur électrique 8 dont l'arbre moteur est relié au tambour 12.

Dans la zone humide 6, de l'eau, par exemple lors d'un lavage du véhicule, peut ruisseler ayant tendance à goutter le long du câble 11 sur le moteur électrique 8 et le tambour 12.

Ce ruissellement d'eau peut provoquer des court-circuits du moteur électrique 8 et à de très basses températures l'eau peut geler sur le câble 11 et sur le tambour 8 pouvant bloquer le dispositif lève-vitre 7.

Selon l'invention, le dispositif lève-vitre 7 comprend une platine de support 13 en matière plastique rigide fixée à la doublure interne 4 en définissant un espace avec cette dernière.

Le moteur électrique 8 et le tambour 12 sont fixés à la platine de support 13 par des vis 14 et sont logés dans l'espace entre cette platine et la doublure interne 4.

Pour permettre le montage notamment du moteur électrique 8 et du tambour 12 à la platine de support 13, la doublure interne en tôle 4 comporte une ouverture 15 de passage de ces deux éléments dans la zone humide 6 qui est ensuite rebouchée par une feuille 16 assurant l'étanchéité entre la zone humide et la zone sèche et qui est fixée à la doublure interne 4.

La platine de support 13 comprend un écran de protection 17 réalisé en une seule pièce par moulage avec cette platine. L'écran de protection 17 surplombe le moteur électrique 8 ainsi que le tambour 12 pour les protéger de l'eau susceptible de ruisseler au-dessus d'eux.

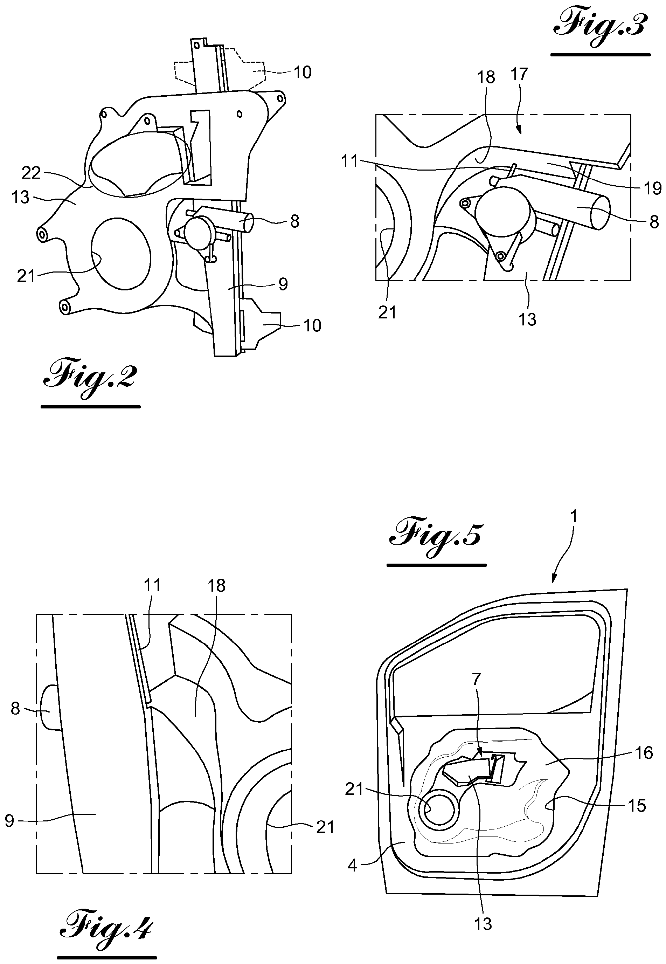

Comme représenté aux figures 3 et 4, l'écran de protection 17 comprend une partie de paroi arquée 18 prolongée par une partie de paroi rectiligne 19, ces deux parois s'étendant dans un plan vertical et longitudinal de la porte latérale 1.

En outre, pour davantage protéger le tambour 12 des eaux de ruissellement, celui-ci est logé dans une paroi annulaire 20 venant de matière avec la platine de support 13 et en regard du moteur électrique 8.

Avantageusement, le rail de guidage 9 du curseur 10 est également réalisé en une seule pièce avec la platine de support 13.

Comme représenté en figure 2, la platine de support 13 comporte une ouverture circulaire traversante 21 destinée à la fixation d'un haut-parleur.

La platine de support 13 peut être également conçue pour intégrer le support d'autres pièces, telles que par exemple la commande d'ouverture intérieure de la porte latérale comme symbolisé par la partie ovale 22 de la figure 2.

De préférence, la platine de support en réalisée en une matière à base de polytéréphtalate de butylène 30%.

L'invention ci-dessus décrite permet de protéger efficacement des projections d'eau et du gel les zones à risques du dispositif lève-vitre logé dans la zone humide du caisson de la porte latérale d'un véhicule automobile et telles que le moteur électrique et le tambour de ce dispositif. En outre, le dispositif lève-vitre de l'invention est d'une conception simple et peu onéreuse.

## Revendications

1. Dispositif lève-vitre pour ouvrant de véhicule comprenant un moteur électrique (8) permettant d'entraîner un mécanisme à tambour (12), câble (11), rail (9) et curseur (10) pour déplacer une vitre entre des positions ouverte et fermée, une platine de support (13) en matière plastique rigide à laquelle sont fixés le moteur électrique (8) et le tambour (12), **caractérisé en ce qu'**il comporte un écran de protection (17) réalisé en une seule pièce avec la platine de support (13), surplombant le moteur électrique (8) et le tambour (12) et apte à protéger le moteur électrique(8) et le tambour (12) de l'eau susceptible de ruisseler sur le moteur électrique (8) et le tambour (12), le rail de guidage (9) du curseur (10) étant en outre réalisé en une seule pièce avec la platine de support (13).

2. Dispositif lève-vitre selon la revendication 1, **caractérisé en ce que** le tambour (12) est logé dans une paroi annulaire (20) de la platine de support (13) qui comprend une ouverture traversante (21) destinée à la fixation d'un haut-parleur.

3. Dispositif lève-vitre selon l'une des revendications 1 ou 2, dont la platine de support (13) est réalisée à base de polytéréphtalate de butylène 30%.

4. Ouvrant de véhicule, notamment automobile, comprenant une doublure (4) interposée entre un panneau de garnissage interne (2) et un panneau extérieur (3), la doublure (4) délimitant avec le panneau de garnissage interne(2) une zone sèche (5) et avec le panneau extérieur (3) une zone humide (6), et un dispositif lève-vitre (7) suivant l'une des revendications 1 à 3, qui est logé dans la zone humide (6), le moteur électrique (8) étant disposé avec le tambour (12) dans l'espace entre la platine de support (13) et la doublure (4), l'écran de protection (17) surplombant le moteur électrique (8) et le tambour (12) pour les protéger de l'eau susceptible de ruisseler au-dessus du moteur électrique (8) et du tambour (12).

5. Ouvrant de véhicule selon la revendication 4, **caractérisé en ce que** le tambour (12) est logé dans une paroi annulaire (20) de la platine de support (13) et située en regard du moteur électrique (8).

6. Ouvrant de véhicule selon la revendication 4 ou 5, **caractérisé en ce que** l'écran de protection (17) comprend une partie de paroi arquée (18) prolongée par une partie de paroi rectiligne (19) et qui s'étendent dans un plan vertical et longitudinal de l'ouvrant (1).

7. Ouvrant de véhicule selon l'une des revendications 4 à 6, **caractérisé en ce que** la platine de support (13) comprend une ouverture traversante (21) destinée à la fixation d'un haut-parleur.

8. Véhicule automobile comprenant au moins un ouvrant, **caractérisé en ce que** l'ouvrant (1) est tel que défini dans l'une quelconque des revendications 4 à 7.

9. Véhicule automobile selon la revendication 8, **caractérisé en ce que** l'ouvrant (1) est une porte latérale.

## Patentansprüche

1. Fensterheber für Fahrzeugflügel mit einem Elektromotor (8) zum Antrieb eines Trommelmechanismus (12), Kabel (11), Schiene (9) und Schieber (10) zum Bewegen einer Scheibe zwischen offenen und geschlossenen Positionen, einer Trägerplatte (13) aus starrem Kunststoff, an der der Elektromotor (8) und die Trommel (12) befestigt sind, **dadurch gekennzeichnet, dass** sie Mit der Trägerplatte (13) einstückig ausgebildetes Schutzschild (17) über dem Elektromotor (8) und der Trommel (12), das den Elektromotor (8) und die Trommel (12) vor Wasser schützen kann, das auf den Elektromotor (8) und die Trommel (12), die Führungsschiene (9) des Schiebers (10) aufrutschbar ist ferner einstückig mit der Trägerplatte (13) ausgebildet ist.

2. Fensterheber nach Anspruch 1, **dadurch gekennzeichnet, dass** die Trommel (12) in einer ringförmigen Wand (20) der Trägerplatte (13) untergebracht ist, die eine Durchgangsöffnung (21) zur Befestigung eines Lautsprechers aufweist.

3. Fensterheber nach einem der Ansprüche 1 oder 2, bei dem die Trägerplatte (13) aus 30% Polybutylenterephthalat besteht.

4. Fahrzeugflügel, insbesondere für Kraftfahrzeuge, mit einer zwischen einer inneren Verkleidungsplatte (2) und einer äußeren Verkleidungsplatte (3) angeordneten Verkleidung (4), wobei die Verkleidung (4) mit der inneren Verkleidungsplatte (2) einen trockenen Bereich (5) und mit der äußeren Verkleidungsplatte (3) einen feuchten Bereich (6) begrenzt, und einer Fensterhebervorrichtung (7) nach einem der Ansprüche 1 bis 3, die im Bereich aufgenommen ist Nass (6), wobei der Elektromotor (8) mit der Trommel (12) im Raum zwischen der Trägerplatte (13) und der Auskleidung (4) angeordnet ist, wobei der Schutzschirm (17) über dem Elektromotor (8) und der Trommel (12) liegt, um sie vor über dem Elektromotor (8) und der Trommel (12) aufschäumbarem Wasser zu schützen .

5. Fahrzeugflügel nach Anspruch 4, **dadurch gekennzeichnet, dass** die Trommel (12) in einer dem Elektromotor (8) zugewandten Ringwand (20) der Trägerplatte (13) untergebracht ist.

6. Fahrzeugflügel nach Anspruch 4 oder 5, **dadurch gekennzeichnet, dass** der Schutzschirm (17) einen bogenförmigen Wandteil (18) umfasst, der durch einen geradlinigen Wandteil (19) verlängert ist und sich in einer vertikalen und longitudinalen Ebene des Flügels (1) erstreckt.

7. Fahrzeugflügel nach einem der Ansprüche 4 bis 6, **dadurch gekennzeichnet, dass** die Trägerplatte (13) eine Durchgangsöffnung (21) zur Befestigung eines Lautsprechers aufweist.

8. Kraftfahrzeug mit mindestens einem Flügel, **dadurch gekennzeichnet, dass** der Flügel (1) wie in einem der Ansprüche 4 bis 7 definiert ist.

9. Kraftfahrzeug nach Anspruch 8, **dadurch gekennzeichnet, dass** der Flügel (1) eine Seitentür ist.

## Claims

1. A glass lift for opening of a vehicle comprising an electric motor (8) which can be used to drive a drum mechanism (12), cable (11), rail (9) and cursor (10) to move a glass between open and closed positions, a support plate (13) made of rigid plastic to which the electric motor (8) and drum (12) are attached, **characterized in that** it has a protective screen (17) done in a single component with the support plate (13), overhanging the electric motor (8) and the drum (12) and able to protect the electric motor(8) and the drum (12) from water that may run on the electric motor (8) and the drum (12), the guide rail (9) of the cursor (10) being moreover done in one component with the support plate (13).

2. Glass lift device according to Claim 1, characterized as the drum (12) is housed in a ring wall (20) of the support plate (13) which includes a cross opening (21) for the attachment of a loudspeaker.

3. Glass-lift device according to one of the claims 1 or 2, whose support plate (13) is made of 30% butylene polyterephthalate.

4. A vehicle, including an automobile, that includes a lining (4) between an inner lining sign (2) and an outer sign (3), a lining (4) that marks with the inner lining sign(2) a dry zone (5) and with the outer zone (3) a damp one (6), and a glass lift (7) that follows one of the claims 1 to 3, which is a dwelling In wet zone (6), the electric motor (8) being placed with the drum (12) in the space between the support plate (13) and the lining (4), the protective screen (17) above the electric motor (8) and the drum (12) to protect them from water that could run over the electric motor (8) and drum (12).

5. Vehicle opening according to Claim 4, characterized as the drum (12) is housed in a ring wall (20) of the support plate (13) and located next to the electric motor (8).

6. Vehicle opening according to Claim 4 or 5, characterized as the protective screen (17) consists of a part of arched wall (18) extended by a part of straight wall (19) and extending in a vertical and longitudinal drawing of the opening (1).

7. Vehicle opening in accordance with one of claims 4 to 6, **characterized by** the fact that the support plate (13) includes a cross opening (21) for the attachment of a speaker.

8. Motor vehicle with at least one opening, characterized as the opening (1) is as defined in any of the claims 4 to 7.

9. Motor vehicle according to claim 8, characterized as the opening (1) is a side door.
